# EUROPEAN PATENT SPECIFICATION

(11) **EP 3 280 244 B1**
(45) Date of publication and mention of the grant of the patent: **16.10.2019**
(21) Application number: 16717474.7
(22) Date of filing: 07.04.2016
(51) Int. Cl.: A01D 34/66, A01D 43/10, A01D 57/30

(54) **A MOWER AND A METHOD FOR CONFIGURING A MOWER TO SELECTIVELY DISCHARGE CUT FORAGE IN RESPECTIVE DIRECTIONS SIDEWARDLY AND REARWARDLY FROM THE MOWER**
MÄHER UND VERFAHREN ZUR KONFIGURATION EINES MÄHERS ZUM SELEKTIVEN ENTLADEN VON MÄHGUT IN RESPEKTIVEN SEITWÄRTS- ODER RÜCKWÄRTSRICHTUNGEN VOM MÄHER
TONDEUSE ET PROCÉDÉ DE CONFIGURATION DE TONDEUSE POUR DÉVERSER SÉLECTIVEMENT LE FOURRAGE COUPÉ DANS DES DIRECTIONS RESPECTIVES VERS LE CÔTÉ ET VERS L'ARRIÈRE DE LA TONDEUSE

(30) Priority: 07.04.2015 IE 20150095
(43) Date of publication of application: 14.02.2018
(73) Proprietor: Sheedy, Thomas, County Limerick (IE); Sheedy, Nuala, County Limerick (IE); O'Connell, Anne, County Cork (IE); Herbert, Michael, County Limerick (IE); O'Donnell, Mark, County Limerick (IE)
(72) Inventor: Sheedy, Thomas, County Limerick (IE); Sheedy, Nuala, County Limerick (IE); O'Connell, Anne, County Cork (IE); Herbert, Michael, County Limerick (IE); O'Donnell, Mark, County Limerick (IE)
(74) Representative: Gorman, Francis Fergus
(86) International application number: PCT/IE2016/000004
(87) International publication number: WO 2016/162862

(56) References cited:
- EP-A1- 2 829 168
- GB-A- 1 597 276
- US-A- 5 133 175
- US-A- 5 930 988

## Description

The present invention relates to a mower, and in particular, a forage mower for harvesting forage, and to a method for selectively configuring a forage mower for directing cut forage in respective directions sidewardly and rearwardly of the mower. The invention also relates to a retrofittable apparatus for retrofitting to a forage mower.

Forage mowers are well known and are used for cutting forage such as, for example, grass, hay, wheat, barley and other such crops. In general, such forage mowers comprise a housing defining a hollow interior region having a forwardly facing open mouth and a plurality of cutting elements arranged side by side transversely across the forwardly facing open mouth for cutting the forage, a conditioning drum is located in the hollow interior region rearwardly of the cutting elements and extends transversely across the hollow interior region. The conditioning drum is rotatable about a transversely extending rotational axis for conditioning the cut forage and for transferring cut forage from the cutting elements rearwardly to a transfer auger located rearwardly of the conditioning drum. The transfer auger extends transversely across the housing and is rotatable about an axis extending transversely of the housing for urging cut forage transversely across the hollow interior region of the housing for discharge in a sward to one side of the housing.

GB 1 597 276 A discloses a forage mower according to the preamble of appended claim 1.

Some forage mowers which include a transversely extending transfer auger also include a transversely extending rearward open mouth which extends transversely across the housing adjacent a rear end thereof, and which is defined between a transversely extending upper edge and a spaced apart transversely extending lower edge. A closure element comprising a transversely extending rear door is pivotally coupled to the housing adjacent the lower edge of the rearward open mouth about a transversely extending pivot axis. The rear door is pivotal downwardly about the transverse pivot axis from a closed state closing the rearward open mouth to an open state for accommodating cut forage through the rearward open mouth. The rearward open mouth in such forage mowers is provided so that the mower can be selectively operated for discharging the cut forage sidewardly from one side of the mower with the rear door in the closed state, or rearwardly from the mower through the rearward open mouth with the rear door in the open state.

A problem with such known forage mowers, when used with the rear door in the open state for discharging the cut forage in a rearwardly directed sward from the mower, is that, the sward of cut forage is relatively wide, and in general, extends the width of the rearward open mouth, which in general is similar to the width of the forage mower. In general, the width of such swards of cut forage is considerably wider than the effective pick-up width of pick-up mechanisms of forage crop balers and other forage crop management and working machines. This is undesirable and leads to significant inefficiencies in baling forage crop materials, such as grass, silage and other such forage crops.

There is therefore a need for a forage mower and a method which addresses this problem, and ideally produces a relatively narrow rearwardly directed sward of cut forage. Further, there is a need for a retrofittable apparatus for fitting to a forage mower to configure the forage mower for delivering such a sward of cut forage rearwardly of the mower.

The present invention is directed towards providing such a forage mower, as defined by appended claim 1, and such a method, as defined by appended claim 14, as well as a method comprising the providion of a retrofittable apparatus, as defined by appended claim 15.

According to the invention there is provided a forage mower comprising a housing defining a hollow interior region and a forward open mouth, a plurality of cutting elements located in or adjacent the forward open mouth, a transfer element located in the hollow interior region rearwardly of the cutting elements for urging the cut forage from the cutting elements transversely across the hollow interior region for discharge adjacent one side of the housing, the housing defining a rearward open mouth between a transversely extending upper edge and a spaced apart transversely extending lower edge, a closure element extending between a proximal end and a distal end, and being pivotally coupled to the housing about a transversely extending main pivot axis adjacent the upper edge of the rearward open mouth and the proximal end of the closure element, and the closure element being pivotal downwardly about the main pivot axis from an upper open state defining a rearwardly facing discharge outlet between the lower edge of the rearward open mouth and the distal end of the closure element, to a lower closed state with the distal end of the closure element adjacent the lower edge of the rearward open mouth closing the rearward open mouth, an upper rear portion of the housing and the closure element in the open state forming a passageway over the transfer element which terminates in the discharge outlet, and a pair of transversely spaced apart deflector elements extending downwardly from one of the closure element and the upper rear portion of the housing into the passageway over the transfer element and being configured to direct the cut forage rearwardly from the housing through the discharge outlet in a relatively narrow sward.

In one aspect of the invention the deflector elements define with the lower edge of the rearward open mouth and the distal end of the closure element the discharge outlet.

In another aspect of the invention the deflector elements comprise respective deflector plates, the deflector plates being angled relative to each other in a generally downstream converging direction relative to the direction of delivery of the cut forage through the passageway.

Preferably, one of the deflector elements is urgeable between an operative state extending downwardly into the passageway over the transfer element, and an inoperative state having substantially no deflecting effect on the cut forage. Advantageously, the urgeable one of the deflector elements is pivotally coupled to the one of the closure element and the upper rear portion of the housing about a secondary pivot axis, and is pivotal about the secondary pivot axis between the operative state and the inoperative state.

In one aspect of the invention the secondary pivot axis extends substantially parallel to the urgeable one of the deflector elements when the urgeable one of the deflector elements is in the operative state. Advantageously, the urgeable one of the deflector elements in the inoperative state lies substantially adjacent the one of the closure element and the upper rear portion of the housing from which the urgeable one of the deflector elements extends. Preferably, the urgeable one of the deflector elements in the inoperative state lies substantially parallel to the one of the closure element and the upper rear portion of the housing from which the urgeable one of the deflector elements extends.

In one aspect of the invention an urging means is provided for urging the urgeable one of the deflector elements between the operative state and the inoperative state. Preferably, the urging means acts between the urgeable one of the deflector elements and the one of the closure element and the upper rear portion of the housing from which the urgeable one of the deflector elements extends. Advantageously, the urging means comprises an urging ram. Ideally, the urging ram comprises an hydraulically powered urging ram.

In another aspect of the invention the deflector elements are located on the upper rear portion of the housing.

In another aspect of the invention the rearward open mouth defined by the housing extends substantially the width of the housing.

In a further aspect of the invention the rearward open mouth is located adjacent the rear of the housing.

Preferably, the discharge outlet is located rearwardly of the transfer element.

Advantageously, the distal end of the closure element terminates in a transversely extending distal edge.

Preferably, the transversely extending distal edge of the closure element is configured to abut the lower transverse edge of the open mouth when the closure element is in the closed state.

In a further aspect of the invention the proximal end of the closure element terminates in a transversely extending proximal edge which extends adjacent the transversely extending upper edge defined by the rearward open mouth.

Preferably, the closure element is of arcuate cross-section when viewed from a side of the housing.

In another aspect of the invention a drive means is provided for urging the closure element between the closed state and the open state. Preferably, the drive means acts between the housing and the closure element. Advantageously, the drive means comprises a drive ram. Advantageously, the drive means comprises an hydraulically powered drive ram.

Also disclosed herein is a retrofittable apparatus for fitting to a forage mower to configure the forage mower to discharge a relatively narrow sward of cut forage in a direction rearwardly from the forage mower, the forage mower being of the type comprising a housing defining a hollow interior region and a forward open mouth, a plurality of cutting elements located in or adjacent the forward open mouth, a transfer element located in the hollow interior region rearwardly of the cutting elements for urging cut forage from the cutting elements transversely across the hollow interior region for discharge adjacent one side of the housing, the housing defining a rearward open mouth between a transversely extending upper edge and a spaced apart transversely extending lower edge, the retrofittable apparatus being configured for mounting on the housing and comprising an adapter element for closing the rearward open mouth, the adapter element comprising a stationary element extending between a proximal end and a distal end, and a closure element extending between a proximal end and a distal end, and being pivotally coupled to the stationary element about a transversely extending main pivot axis extending transversely adjacent the distal end of the stationary element and the proximal end of the closure element, the stationary element being configured for coupling to the housing with the proximal end of the stationary element adjacent the upper edge of the rearward open mouth, and a distal end of the closure element adjacent the lower edge of the rearward open mouth, so that the main pivot axis extends transversely relative to the housing, and the closure element is pivotal about the main pivot axis downwardly from an upper open state defining a rearwardly facing discharge outlet between the lower edge of the rearward open mouth and the distal end of the closure element, to a lower closed state with the distal end of the closure element adjacent the lower edge of the rearward open mouth closing the rearward open mouth, the stationary element and the closure element in the open state forming a passageway over the transfer element which terminates in the discharge outlet, and a pair of transversely spaced apart deflector elements extending downwardly from one of the closure element and the stationary element and configured to extend into the passageway over the transfer element and being configured to direct the cut forage rearwardly from the housing through the discharge outlet in a relatively narrow sward.

In one aspect the deflector elements are configured to define with the lower edge of the rearward open mouth and the distal end of the closure element the discharge outlet.

Preferably, one of the deflector elements is urgeable between an operative state configured to extend downwardly into the passageway over the transfer element, and an inoperative state having substantially no deflecting effect on the cut forage. Preferably, the urgeable one of the deflector elements is pivotally coupled to the one of the closure element and the stationary element about a secondary pivot axis, and is pivotal about the secondary pivot axis between the operative state and the inoperative state.

Advantageously, the urgeable one of the deflector elements in the inoperative state lies substantially adjacent the one of the closure element and the stationary element from which the urgeable one of the deflector elements extends.

Preferably, the urgeable one of the deflector elements in the inoperative state extends substantially parallel to the one of the closure element and the stationary element from which the urgeable one of the deflector elements extends.

In another aspect the urging means acts between the urgeable one of the deflector elements and the one of the stationary element and the closure element from which the urgeable one of the deflector elements extends.

In a further aspect the deflector elements extend downwardly from the stationary element.

Additionally, the invention provides a method for configuring a forage mower for discharging a relatively narrow sward of cut forage in a direction rearwardly from the forage mower, the forage mower comprising a housing defining a hollow interior region and a forward open mouth, a plurality of cutting elements located in or adjacent the forward open mouth, a transfer element located in the hollow interior region rearwardly of the cutting elements for urging the cut forage from the cutting elements transversely across the hollow interior region for discharge adjacent one side of the housing, the housing defining a rearward open mouth having a transversely extending upper edge and a spaced apart transversely extending lower edge, the method comprising providing a closure element extending between a proximal end and a distal end and pivotally coupling the closure element to the housing about a transversely extending main pivot axis adjacent the upper edge of the open mouth and the proximal end of the closure element, so that the closure element is pivotal downwardly about the main pivot axis from an upper open state defining a rearwardly facing discharge outlet between the lower edge of the rearward open mouth and the distal end of the closure element, to a lower closed state with the distal end of the closure element adjacent the lower edge of the rearward open mouth closing the rearward open mouth, locating the closure element so that an upper rear portion of the housing and the closure element in the open state form a passageway over the transfer element which terminates in the discharge outlet, and locating a pair of spaced apart deflector elements extending downwardly from one of the closure element and the upper rear portion of the housing, the deflector elements being configured to extend into the passageway over the transfer element and being configured to direct the cut forage rearwardly from the housing through the discharge outlet in a relatively narrow sward.

The invention also provides a method for configuring a forage mower for discharging a relatively narrow sward of cut forage in a direction rearwardly from the forage mower, the forage mower comprising a housing defining a hollow interior region and a forward open mouth, a plurality of cutting elements located in or adjacent the forward open mouth, a transfer element located in the hollow interior region rearwardly of the cutting elements for urging the cut forage from the cutting elements transversely across the hollow interior region for discharge adjacent one side of the housing, the housing defining a rearward open mouth between a transversely extending upper edge and a spaced apart transversely extending lower edge, the method comprising providing a retrofittabie apparatus, the retrofittable apparatus being configured for mounting on the housing and comprising an adapter element for closing the rearward open mouth, the adapter element comprising a stationary element extending between a proximal end and a distal end, and a closure element extending between a proximal end and a distal end, and being pivotally coupled to the stationary element about a transversely extending main pivot axis extending transversely adjacent the distal end of the stationary element and the proximal end of the closure element, the stationary element being configured for coupling to the housing with the proximal end of the stationary element adjacent the upper edge of the rearward open mouth, and a distal end of the closure element adjacent the lower edge of the rearward open mouth, so that the main pivot axis extends transversely relative to the housing, and the closure element is pivotal about the main pivot axis downwardly from an open state defining a rearwardly facing discharge outlet between the lower edge of the rearward open mouth and the distal end of the closure element, to a closed state with the distal end of the closure element adjacent the lower edge of the rearward open mouth closing the rearward open mouth, the stationary element and the closure element in the open state being configured to form a passageway over the transfer element which terminates in the discharge outlet, and a pair of transversely spaced apart deflector elements extending downwardly from one of the closure element and the stationary element and configured to extend into the passageway over the transfer element and being configured to direct the cut forage rearwardly from the housing through the discharge outlet in a relatively narrow sward.

The advantages of the forage mower according to the invention are many. A particularly important advantage of the forage mower according to the invention is that the forage mower is selectively operable in two modes. In one of the modes the forage mower is operated to discharge the cut forage sidewardly through a side outlet, and in the other mode of operation the forage is discharged rearwardly through a rearwardly facing discharge outlet. The forage mower can be operated readily easily between the two modes, without the need to provide complex switching systems for engaging and disengaging drive to the transfer element, since the transfer element remains operating in both modes of operation of the forage mower. This, thus, provides a relatively simple to operate forage mower and a minimum maintenance forage mower. In fact, to provide the forage mower according to the invention to be operable selectively in the two modes, the only additional powering equipment required is the drive means and the urging means, which when provided as first and second drive rams can be readily coupled to the hydraulic supply of the tractor or other prime mover, and can be readily easily operated from the cab of the tractor.

A further and particularly important advantage of the invention is that the mower when operating in the mode in which the cut forage is discharged rearwardly in a sward through the rearwardly facing discharge outlet, the sward is of relatively narrow width and is also of substantially constant depth across its transverse width. This is particularly important in cases where the sward is to be subsequently picked up by a pick-up mechanism of a forage crop baler of the type which forms the forage into a bale, such as, for example, a round bale or other forage crop management and working machines.

The invention will be more clearly understood from the following description of a preferred embodiment thereof, which is given by way of example only, with reference to the accompanying drawings, in which:
Fig. 1 is a top plan view of a forage mower according to the invention illustrated mounted on a mounting system for coupling to a three-point linkage of a tractor or other prime mover,

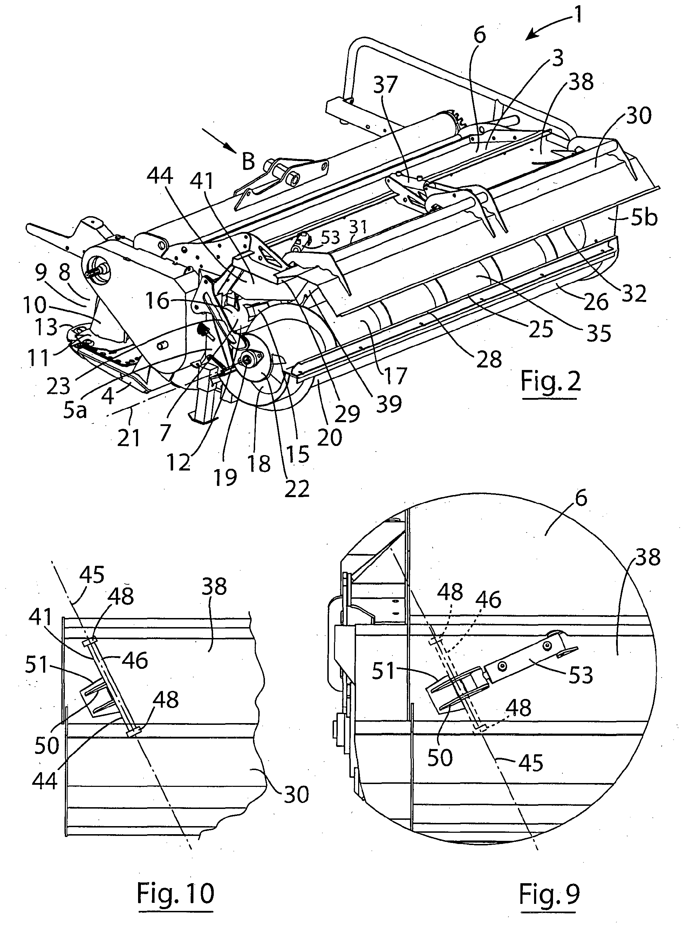

Fig. 2 is a perspective view of the forage mower of Fig. 1,
Fig. 3 is a cross-sectional side elevational view of the forage mower of Fig. 1,
Fig. 4 is a view similar to Fig. 3 of the forage mower of Fig. 1 with a portion of the forage mower in a different state to that of Fig. 3,
Fig. 5 is a rear end elevational view of the forage mower of Fig. 1 with a portion of the forage mower of Fig. 1 cut away,
Fig. 6 is a view similar to Fig. 5 of the forage mower of Fig. 1 with a portion of the forage mower in a different state to that of Fig. 5,
Fig. 7 is a perspective view of the forage mower of Fig. 1 with a portion of the forage mower cut away,
Fig. 8 is a view similar to Fig. 7 of the forage mower of Fig. 1 but with a portion of the forage mower in a different state to that of Fig. 7,
Fig. 9 is an enlarged top plan view of a detail of the forage mower of Fig. 1, and
Fig. 10 is an enlarged underneath plan view of a part of the portion of Fig. 9 of the forage mower of Fig: 1.

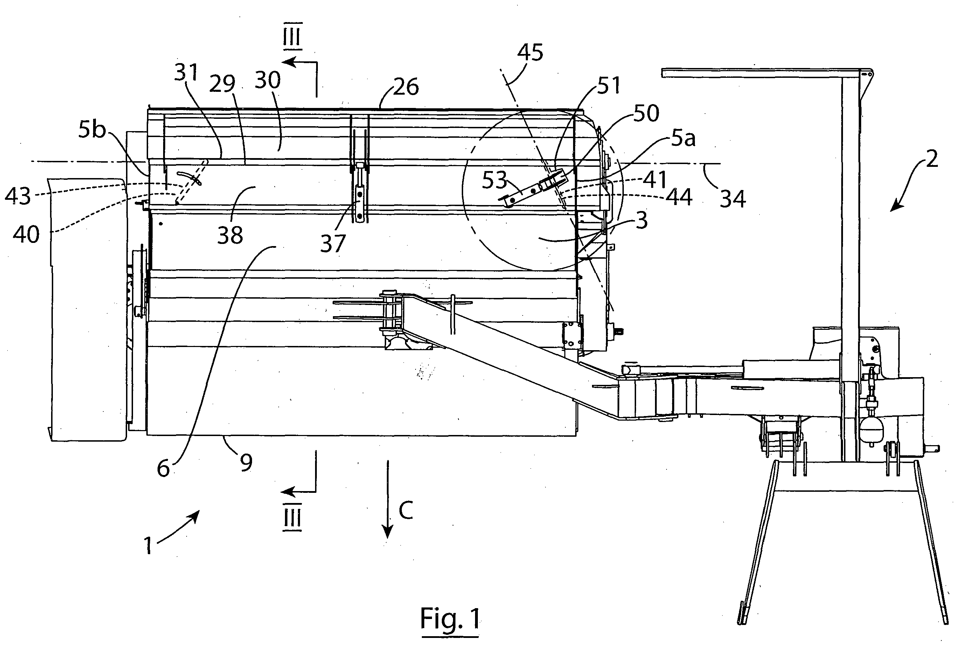

Referring to the drawings, there is illustrated a forage mower according to the invention, indicated generally by the reference numeral 1, which is particularly suitable for cutting grass, hay, wheat, barley and other such forage crops. The mower 1 is illustrated in Fig. 1 mounted on a mounting system 2 for coupling to a three-point linkage (not shown) of a tractor or other prime mover (neither of which are shown). Such mounting systems as the mounting system 2 will be well known to those skilled in the art. The forage mower 1 comprises a housing 3 having a base 4, a pair of spaced apart opposite side walls 5a and 5b extending upwardly from the base 4 and a top wall 6 spaced apart above the base 4 and extending between the side walls 5a and 5b. The base 4, the side walls 5 and the top wall 6 define a hollow interior region 7 and a forward open mouth 8 to the hollow interior region 7 located to the front 9 of the housing 3.

A plurality of cutting elements 10 are located in the forward open mouth 8 and are arranged side by side transversely across the forward open mouth 8 for cutting the forage material. The cutting elements 8 are of the type which comprise a circular disc element 11 rotatably mounted about a substantially vertically extending rotational axis, and a plurality of cutting blades 13, typically four cutting blades 13, which are equi-spaced apart circumferentially around the periphery of the disc element 11, and extend radially therefrom for cutting the forage as the disc elements rotate. Such cutting elements as the cutting elements 10 will be well known to those skilled in the art. A drive transmission (not shown) is provided for driving the cutting elements 10 as will also be well known to those skilled in the art. Typically, such drive transmissions comprise a gearbox (not shown) which is typically located in the mounting system 2, and which is coupled to the power-take-off shaft of a tractor or other prime mower to which the mower 1 is hitched. A chain drive and/or gear train drive (neither of which are shown) transmits drive from the gearbox to the cutting elements 10.

A conditioning element, in this embodiment of the invention a conditioning drum 12 mounted fast on a shaft 16 is located in the hollow interior region 7 rearwardly of the cutting elements 10 and extends transversely across the hollow interior region 7 between the side walls 5, and is rotatable about a transversely extending rotational axis 14 defined by the shaft 16. The shaft 16 is rotatably carried in bearings (not shown) in the side walls 5. The conditioning drum 12 comprises a plurality of circumferentially and transversely spaced apart radially extending conditioning vanes 15, which condition the cut forage material and urge cut forage rearwardly from the cutting elements 10 over the conditioning drum 12 between the conditioning drum 12 and the top wall 6 as the conditioning drum 12 rotates about the rotational axis 14 in the direction of the arrow A. A drive transmission (not shown) transmits drive from the gearbox (not shown) to the shaft 16 for rotating the conveying drum 12 in the direction of the arrow A.

A transfer means, in this embodiment of the invention a transfer auger 17 is located in the hollow interior region 7 of the housing 3 to the rear thereof and rearwardly of the conditioning drum 12 for receiving cut forage from the conditioning drum 12, and for transferring the cut forage sidewardly transversely across the hollow interior region 7 for discharge through a sidewardly facing side outlet 18 adjacent one side of the forage mower 1. In this embodiment of the invention the side outlet 18 is located in the side wall 5a adjacent the transfer auger 17 through which the cut forage is discharged by the transfer auger 17 to form a sward to one side of the forage mower 1. The transfer auger 17 is mounted fast on an auger shaft 19 and extends transversely across the hollow interior region 7 between the side walls 5 and is located in a transversely extending well 20 formed in the base 4. The auger shaft 19 is rotatable in bearings (not shown), one of which is located in the side walls 5b and the other of which is located in a mounting disc 22. The mounting disc 22 is carried on a support member 23 extending from the side wall 5a across a portion of the side outlet 18. The auger shaft 19 defines a transversely extending rotational axis 21 about which the auger 17 is rotated in the direction of the arrow B for urging the cut forage across the hollow interior region 7 and through the side outlet 18 to form a sward, which as the mower 1 advances forwardly in the direction of the arrow C, extends rearwardly from the mower 1 to one side thereof. A drive transmission (not shown) is provided from the gearbox (not shown) for driving the auger 17 in the direction of the arrow B..

Up to this the forage mower 1 is substantially similar to a conventional forage mower.

A rearward open mouth 25 is formed in the housing 3 adjacent a rear end 26 thereof. The rearward open mouth 25 is defined between a transversely extending lower edge 28 and a spaced apart transversely extending upper edge 29. The well 20 terminates in the lower edge 28, while the top wall 6 terminates in the upper edge 29.

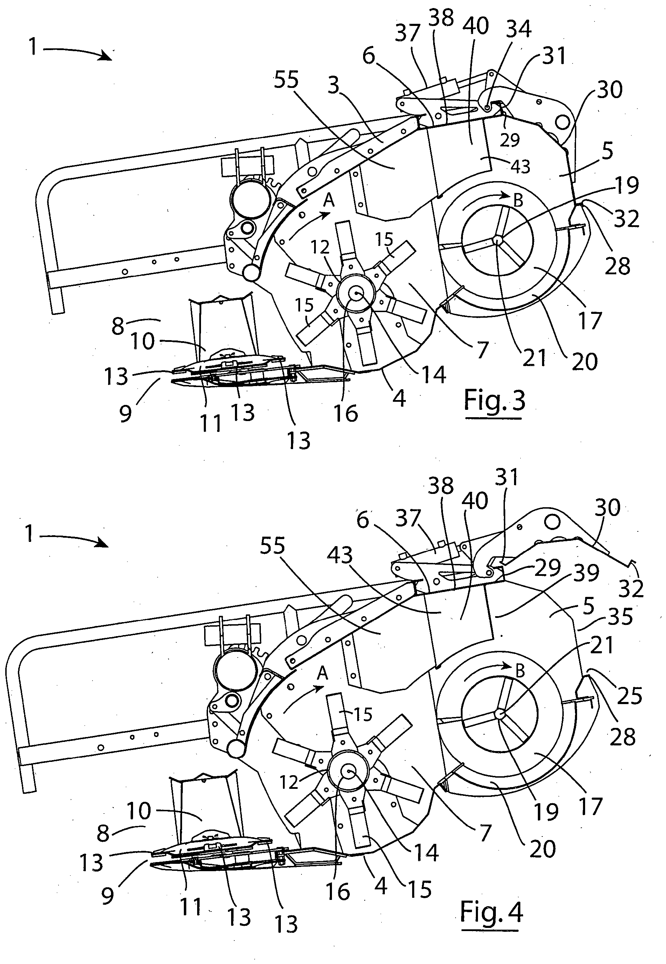

A closure element 30 is provided to close the rearward open mouth 25. The closure element 30 is of substantially arcuate shape when viewed from a side of the mower 1, and extends between a transversely extending proximal end, namely, a transversely extending proximal edge 31 and a transversely extending distal end, namely, a transversely extending distal edge 32. The closure element 30 is pivotally coupled to the top wall 6 about a transversely extending main pivot axis 34 adjacent the upper edge 29 of the rearward open mouth 25 along the proximal edge 31 of the closure element 30. The closure element 30 is pivotal downwardly from an open state illustrated in Fig. 4 defining a rearwardly facing discharge outlet 35 between the lower edge 28 of the rearward open mouth 25 and the distal edge 32 of the closure element 30 through which the cut forage is discharged rearwardly in a relatively narrow sward as will be described in more detail below, to a closed state illustrated in Fig. 3 with the distal edge 32 of the closure element 30 tightly abutting the lower edge 28 of the rearward open mouth 25 to close the rearward open mouth 25. The closure element 30 in the closed state co-operates with the transversely extending well 20 to define an auger housing within which the auger 17 is rotatable for urging the cut forage transversely through the auger housing, and in turn through the side outlet 18.

A drive means, in this embodiment of the invention a first hydraulically powered drive ram 37 acting between the top wall 6 and the closure element 30 operates the closure element 30 between the open and closed states.

In the open state the closure element 30 along with a rear portion of the top wall 6, which in this case comprises a rear panel 38 of the top wall 6, which extends between the side walls 5, form a passageway 39. The passageway 39 extends over the transfer auger 17 for accommodating cut forage over the transfer auger 17 and in turn through the discharge outlet 35 when the closure element 30 is in the open state.

A pair of spaced apart deflector elements, namely, a first deflector element 40, and a second deflector element 41, in this embodiment of the invention are located on the rear panel 38 of the top wall 6 and extend downwardly therefrom into the passageway 39 over the transfer auger 17 for deflecting the cut forage into a narrow sward. In this embodiment of the invention the deflector elements 40 and 41 effectively define the discharge outlet 35 with the lower edge 28 of the rearward open mouth 25 and the distal edge 32 of the closure element 30 when the closure element 30 is in the open state, see Fig. 4.

The first deflector element 40 comprises a first deflector plate 43 which is rigidly mounted to the rear panel 38 of the top wall 6 on the underside thereof and extends downwardly therefrom into the passageway 39. The first deflector plate 43 is angled in a generally inwardly downstream direction when viewed in plan relative to the direction through which the curt forage is urged through the hollow interior region 7 of the housing 3 when the closure element 30 is in the open state for directing the cut forage inwardly into the passageway 39, as will be described below.

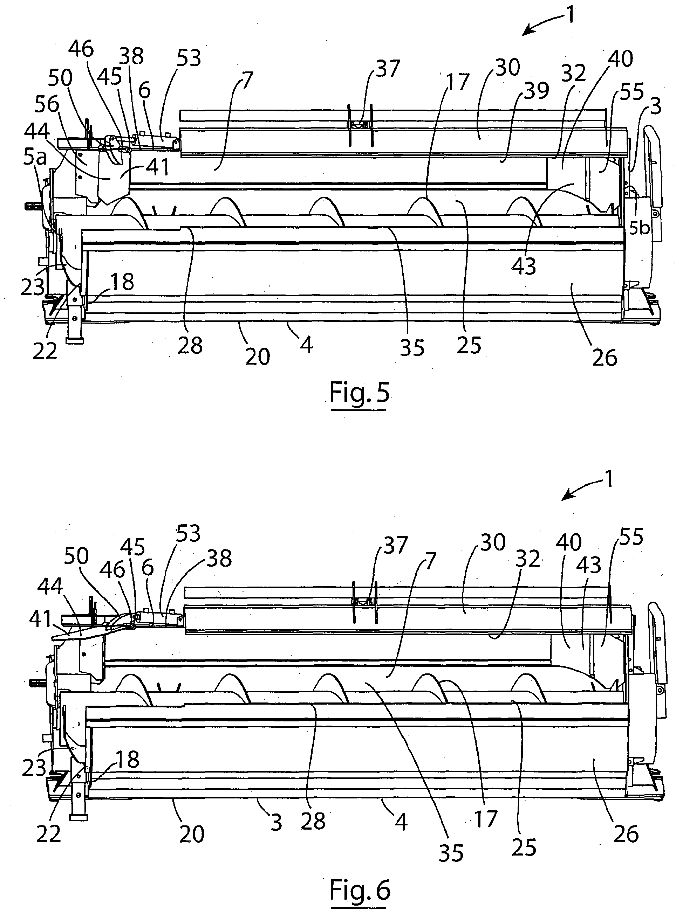

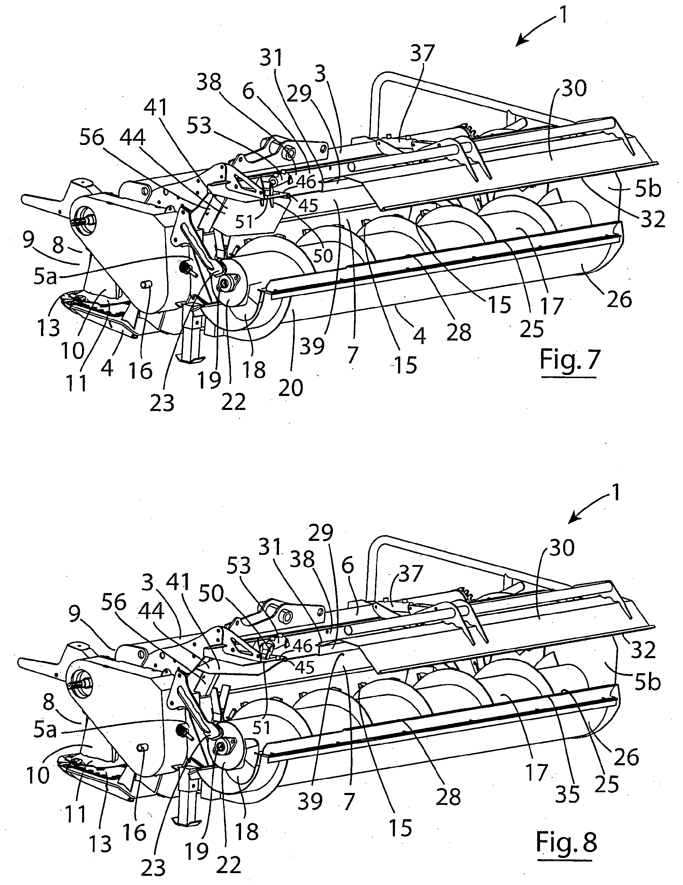

The second deflector element 41 comprises a second deflector plate 44 which is pivotally coupled to the rear panel 38 of the top wall 6 on the underside thereof about a secondary pivot axis 45, and is pivotal about the secondary pivot axis 45 from an operative state illustrated in Figs. 5 and 7 extending downwardly from the closure element 30 into the passageway 35, to an inoperative state illustrated in Figs. 6 and 8 lying substantially adjacent and almost parallel to the rear panel 38 of the top wall 6 between the rear panel 38 and the transfer auger 17. When the second deflector plate 44 is in the operative state, the second deflector plate 44 is angled in a generally inwardly downstream direction when viewed in plan relative to the direction through which the cut forage is urged through the hollow interior region 7 of the housing 3 when the closure element 30 is in the open state for directing the cut forage inwardly into the passageway 39, as will now be described. Accordingly, when the second deflector plate 44 is in the operative state, the first and second deflector plates 43 and 44 extend in a generally downstream converging direction, and co-operate with each other for deflecting the cut forage into a relatively narrow sward in the passageway 39, which is delivered rearwardly through the discharge outlet 35. However, when the second deflector plate 44 is in the inoperative state, and when the closure element 30 is in the closed state, the second deflector plate 44 has little or no effect on the cut forage, which is being urged transversely in the hollow interior region 7 of the housing 3 by the transfer auger 17 through the side outlet 18.

The secondary pivot axis 45 about which the second deflector plate 44 is pivotal extends substantially parallel to the second deflector plate 44 when the second deflector plate 44 is in the operative state. In this embodiment of the invention the second deflector plate 44 is carried on a pivot shaft 46 which defines the secondary pivot axis 45. The pivot shaft 46 is pivotally carried on a pair of pivot mounting brackets 48 secured to the rear panel 38 of the top wall 6 on the underside thereof. An operating bracket 50 extends from the second deflector plate 44 through an elongated slot 51 in the rear panel 38.

An urging means comprising a second hydraulic drive ram 53 acting between the rear panel 38 and the operating bracket 50 pivots the second deflector plate 44 about the secondary pivot axis 45 between the operative and inoperative states.

A pair of fixed stationary upstream deflector plates 55 and 56 are rigidly mounted on the top wall 6 upstream of the first and second deflector plates 43 and 44, and extend downwardly from the top wall 6 into the hollow interior region 7 of the housing 3. The fixed stationary upstream deflector plates 55 and 56 are angled in a generally downstream converging direction relative to each other, and co-operate with each other to give an initial inward deflection of the cut forage just upstream of the first and second deflecting plates 43 and 44.

In use, with the forage mower 1 mounted on the three-point linkage of a tractor or other prime mover by the mounting system 2, and connected to the power take-off shaft and the hydraulic system of the tractor or other prime mover, the forage mower 1 is ready for use. When it is desired to operate the forage mower 1 in a sideward discharge mode for discharging a sward of cut forage sidewardly through the side outlet 18, the second deflector plate 44 is urged by the second drive ram 53 into the inoperative state, and the closure element 30 is operated by the first drive ram 37 into the closed state. Thereafter, as the forage mower 1 is urged forwardly in the direction of the arrow C by a tractor or other suitable prime mover over a meadow or other area where forage is to be cut, and with the cutting elements 10 being rotatably driven, the conditioning drum 20 being rotated in the direction of the arrow A and the transfer auger 17 rotating in the direction of the arrow B, the cutting elements 10 cut the forage. The cut forage is urged by the conditioning drum 12 to the transfer auger 17, which in turn urges the cut forage through the side outlet 18.

When it is desired to operate the forage mower 1 in a rearward discharge mode for discharging a sward of cut forage of relatively narrow width rearwardly through the discharge outlet 35, the closure element 30 is operated by the first drive ram 37 into the open state to define with the rear panel 38 of the top wall 6 the passageway 39 over the transfer auger 17 and the discharge outlet 35 therefrom. The second drive ram 53 is operated for urging the second deflector plate 44 from the inoperative state to the operative state. The forage mower 1 is then ready for discharging the sward of cut forage rearwardly through the discharge outlet 35. Thus, as the forage mower 1 is urged forwardly in the direction of the arrow C by a tractor or other prime mover over the meadow or other area where forage is to be cut, the cutting elements 10 cut the forage, which in turn is urged by the conditioning drum 12 through the passageway 39 over the transfer auger 17. The first and second deflector plates 43 and 44 acting on the cut forage as it is being delivered through the passageway 39 urge the cut forage into a relatively narrow sward which is then discharged rearwardly through the discharge outlet 35 in a relatively narrow sward of substantially constant depth across the transverse width thereof.

It has been found desirable that the second deflector plate 44 be operable between the operative state and the inoperative state, so that when it is desired to operate the forage mower 1 in the sideward discharge mode for discharging the sward of cut grass sidewardly through the side outlet 18, the second deflector plate 44 when in the inoperative state does not have any adverse effect on the action of the transfer auger 17 as it urges the cut forage transversely through the auger housing formed by the cooperating action of the closure element 30 in the closed state with the transverse well 20, and in turn through the side outlet 18. If the second deflector plate 44 were not operable into the inoperative state, when the closure element 30 is in the closed state, the second deflector plate 44, since it is the deflector plate adjacent the side outlet 18, if it were in the operative state would interfere with the augering action of the transfer auger 17 urging the cut forage towards the side outlet 18, due to the angular orientation of the second deflector plate 44, which is angled in a direction which would interfere with the augering action of the transfer auger 17. It has been found that it is unnecessary to arrange the first deflector plate 43 to be operable between an operative state and an inoperative state similar to the second deflector plate 44, due to the fact that the angular orientation of the first deflector plate 43 is such as to co-operate with the transfer auger 17 in augering the cut forage in the direction towards the side outlet 18 when the closure element 30 is in the closed state. However, if desired, the first deflector plate could be pivotally mounted on the rear panel 38 of the top wall 6 and be pivotal between an inoperative state and an operative state.

It has also been found that by deflecting the cut forage into a relatively narrow sward by the first and second deflector plates 43 and 44, the augering action of the rotating transfer auger 17 has little or no effect on the cut forage as it is being delivered through the passageway 39 over the transfer auger 17 by the force of the conditioning drum 12, and thus, the depth of the sward of cut forage discharged rearwardly through the discharge outlet 35 is substantially constant across the transverse width thereof.

While the forage mower 1 has been described as being provided as an integral forage mower 1 complete with the closure element 30 and with the first and second deflector plates 43 and 44 connected to the rear panel 38 of the rear wall 6, it is envisaged that the rear panel 38 with the first and second deflector plates 43 and 44 mounted thereon and with the closure element 30 pivotally coupled to the rear panel 38 could be sold as an adapter element to form a retrofittable apparatus which could be retrofitted to a conventional forage mower 1. The majority of conventional forage mowers 1 are provided with a rearward open mouth similar to the rearward open mouth 25, which is typically closed by a closure plate which in general is hingedly coupled to the housing adjacent a lower edge of the open mouth. In general, the lower edge of the open mouth extends along a rear edge of a transversely extending auger well of such conventional forage mowers.

To retrofit the retrofittable apparatus comprising the rear panel 38 and closure element 30 and the first and second deflector plates 43 and 44, the conventional closure plate of such a conventional forage mower would be merely pivoted downwardly from the closed state closing the rearward open mouth into the open state depending downwardly from the lower edge of the housing. The rear panel 38 which would form a stationary element would be rigidly coupled to the housing adjacent the upper edge of the rearward open mouth of such conventional forage mowers, and the closure element 30 would already be pivotally coupled to the rear panel 38. The adapter apparatus including the rear panel 38 and the closure element 30 would be sized and dimensioned so that in the open state the closure element 30 would define with the lower edge of the rearward open mouth a discharge outlet, similar to the discharge outlet 35 described with reference to the forage mower 1. Thereafter, operation of such a conventional forage mower with the retrofittable apparatus would be similar to that described with reference to the forage mower 1.

It is also envisaged that the conventional closure element closing the rearward open mouth of a conventional forage mower could in fact be disengaged from the conventional forage mower once the retrofittable apparatus had been coupled to the housing of the conventional forage mower, since it would no longer be required.

While the deflector elements have been described as being mounted on the rear panel 38 of the top wall 6, it is envisaged in certain cases that the deflector elements may be mounted on the closure element. Indeed, it is envisaged that in certain cases, both the rear panel and the closure element could be rigidly secured together and the rear panel would be pivotally coupled to the top wall.

While the first and second deflector elements have been described as comprising first and second deflector plates, any other suitable deflector elements may be provided.

While the forage mower according to the invention has been described as being coupled to the three-point linkage of a tractor or other prime mover by a specific type of mounting system, it will be readily apparent to those skilled in the art that the forage mower according to the invention may be coupled to a tractor or any other prime mover by any other suitable mounting or coupling system, whether the mounting system is configured for coupling the forage mower to the rear or to the front of the tractor or prime mover.

## Claims

1. A forage mower comprising a housing (3) defining a hollow interior region (7) and a forward open mouth (8), a plurality of cutting elements (10) located in or adjacent the forward open mouth (8), a transfer element (17) located in the hollow interior region (7) rearwardly of the cutting elements (10) for urging the cut forage from the cutting elements (10) transversely across the hollow interior region (7) for discharge adjacent one side (18) of the housing (3), the housing (3) defining a rearward open mouth (25) between a transversely extending upper edge (29) and a spaced apart transversely extending lower edge (28), **characterised in that** a closure element (30) extends between a proximal end (31) and a distal end (32), and is pivotally coupled to the housing (3) about a transversely extending main pivot axis (34) adjacent the upper edge (29) of the rearward open mouth (25) and the proximal end (31) of the closure element (30), and the closure element (30) is pivotal downwardly about the main pivot axis (34) from an upper open state defining a rearwardly facing discharge outlet (35) between the lower edge (28) of the rearward open mouth (25) and the distal end (32) of the closure element (30), to a lower closed state with the distal end (32) of the closure element (30) adjacent the lower edge (28) of the rearward open mouth (25) closing the rearward open mouth (25), an upper rear portion (38) of the housing (3) and the closure element (30) in the open state form a passageway (39) over the transfer element (17) which terminates in the discharge outlet (35), and a pair of transversely spaced apart deflector elements (40, 41) extend downwardly from one of the closure element (30) and the upper rear portion (38) of the housing (3) into the passageway (39) over the transfer element (17) and are configured to direct the cut forage rearwardly from the housing (3) through the discharge outlet (35) in a relatively narrow sward.

2. A forage mower as claimed in Claim 1 **characterised in that** the deflector elements (40, 41) define with the lower edge (28) of the rearward open mouth (25) and the distal end (32) of the closure element (30) the discharge outlet (35).

3. A forage mower as claimed in Claim 1 or 2 **characterised in that** the deflector elements (40, 41) comprise respective deflector plates (43, 44), the deflector plates (43, 44) being angled relative to each other in a generally downstream converging direction relative to the direction of delivery of the cut forage through the passageway (39).

4. A forage mower as claimed in any preceding claim **characterised in that** one of the deflector elements (40, 41) is urgeable between an operative state extending downwardly into the passageway (39) over the transfer element (17), and an inoperative state having substantially no deflecting effect on the cut

5. A forage mower as claimed in claim 4 **characterised in that** the urgeable one (41) of the deflector elements (40, 41) is pivotally coupled to the one of the closure element (30) and the upper rear portion (38) of the housing (3) about a secondary pivot axis (45), and is pivotal about the secondary pivot axis (45) between the operative state and the inoperative state.

6. A forage mower as claimed in claim 5 **characterised in that** the secondary pivot axis (45) extends substantially parallel to the urgeable one (41) of the deflector elements (40, 41) when the urgeable one (41) of the deflector elements (40, 41) is in the operative state.

7. A forage mower as claimed in any of claims 4-6 **characterised in that** the urgeable one (41) of the deflector elements (40, 41) in the inoperative state lies substantially adjacent the one of the closure element (30) and the upper rear portion (38) of the housing (3) from which the urgeable one (41) of the deflector elements (40, 41) extends.

8. A forage mower as claimed in in any of claims 4-7 **characterised in that** an urging means (53) is provided for urging the urgeable one (41) of the deflector elements (40, 41) between the operative state and the inoperative state.

9. A forage mower as claimed in any preceding claim **characterised in that** the deflector elements (40, 41) are located on the upper rear portion (38) of the housing (3).

10. A forage mower as claimed in any preceding claim **characterised in that** the discharge outlet (35) is located rearwardly of the transfer element (17).

11. A forage mower as claimed in any preceding claim **characterised in that** the distal end (32) of the closure element (30) terminates in a transversely extending distal edge (32) configured to abut the lower transverse edge (28) of the open mouth (25) when the closure element (30) is in the closed state.

12. A forage mower as claimed in any preceding claim **characterised in that** the proximal end (31) of the closure element (30) terminates in a transversely extending proximal edge (31) which extends adjacent the transversely extending upper edge (29) defined by the rearward open mouth (25).

13. A forage mower as claimed in any preceding claim **characterised in that** the closure element (30) is of arcuate cross-section when viewed from a side of the housing (30).

14. A method for configuring a forage mower (1) for discharging a relatively narrow sward of cut forage in a direction rearwardly from the forage mower (1), the forage mower (1) comprising a housing (3) defining a hollow interior region (7) and a forward open mouth (8), a plurality of cutting elements (10) located in or adjacent the forward open mouth (8), a transfer element (17) located in the hollow interior region (7) rearwardly of the cutting elements (10) for urging the cut forage from the cutting elements (10) transversely across the hollow interior region (7) for discharge adjacent one side (18) of the housing (3), the housing (3) defining a rearward open mouth (25) having a transversely extending upper edge (29) and a spaced apart transversely extending lower edge (28), the method comprising providing a closure element (30) extending between a proximal end (31) and a distal end (32) and pivotally coupling the closure element (30) to the housing (3) about a transversely extending main pivot axis (34) adjacent the upper edge (29) of the open mouth (25) and the proximal end (31) of the closure element (30), so that the closure element (30) is pivotal downwardly about the main pivot axis (34) from an upper open state defining a rearwardly facing discharge outlet (35) between the lower edge (28) of the rearward open mouth (25) and the distal end (32) of the closure element (30), to a lower closed state with the distal end (32) of the closure element (30) adjacent the lower edge (28) of the rearward open mouth (25) closing the rearward open mouth (25), locating the closure element (30) so that an upper rear portion (38) of the housing (3) and the closure element (30) in the open state form a passageway (39) over the transfer element (17) which terminates in the discharge outlet (35), and locating a pair of spaced apart deflector elements (40, 41) extending downwardly from one of the closure element (30) and the upper rear portion (38) of the housing (3), the deflector elements (40, 41) being configured to extend into the passageway (39) over the transfer element (17) and being configured to direct the cut forage rearwardly from the housing (3) through the discharge outlet (35) in a relatively narrow sward.

15. A method for configuring a forage mower for discharging a relatively narrow sward of cut forage in a direction rearwardly from the forage mower, the forage mower comprising a housing (3) defining a hollow interior region (7) and a forward open mouth (8), a plurality of cutting elements (10) located in or adjacent the forward open mouth (8), a transfer element (17) located in the hollow interior region (7) rearwardly of the cutting elements (10) for urging the cut forage from the cutting elements (10) transversely across the hollow interior region (7) for discharge adjacent one side (18) of the housing (3), the housing (3) defining a rearward open mouth between a transversely extending upper edge and a spaced apart transversely extending lower edge, the method comprising providing a retrofittable apparatus, the retrofittable apparatus being configured for mounting on the housing (3) and comprising an adapter element (30, 38, 40, 41) for closing the rearward open mouth, the adapter element comprising a stationary element (38) extending between a proximal end and a distal end, and a closure element (30) extending between a proximal end (31) and a distal end (32), and being pivotally coupled to the stationary element (38) about a transversely extending main pivot axis (34) extending transversely adjacent the distal end of the stationary element (38) and the proximal end (31) of the closure element (30), the stationary element (38) being configured for coupling to the housing (3) with the proximal end of the stationary element (38) adjacent the upper edge of the rearward open mouth, and a distal end (32) of the closure element (30) adjacent the lower edge of the rearward open mouth, so that the main pivot axis (34) extends transversely relative to the housing (3), and the closure element (30) is pivotal about the main pivot axis (34) downwardly from an open state defining a rearwardly facing discharge outlet (35) between the lower edge of the rearward open mouth and the distal end (32) of the closure element (30), to a closed state with the distal end (32) of the closure element (30) adjacent the lower edge of the rearward open mouth closing the rearward open mouth, the stationary element (38) and the closure element (30) in the open state being configured to form a passageway (39) over the transfer element (17) which terminates in the discharge outlet (35), and a pair of transversely spaced apart deflector elements (40, 41) extending downwardly from one of the closure element (30) and the stationary element (38) and configured to extend into the passageway (39) over the transfer element (17) and being configured to direct the cut forage rearwardly from the housing (3) through the discharge outlet (35) in a relatively narrow sward.

## Patentansprüche

1. Futtermäher mit einem Gehäuse (3), welches einen hohlen Innenbereich (7) und einen vorwärts gerichteten, offenen Mund (8) festlegt, mehreren Schneidelementen (10), die in oder nahe dem vorwärts gerichteten, offenen Mund (8) angeordnet sind, einem in dem hohlen Innenbereich (7) hinter den Schneidelementen (10) angeordneten Transferelement (17) zum Drängen des geschnittenen Futters von den Schneidelementen (10) quer durch den hohlen Innenbereich (7) zum Ausstoß nahe einer Seite (18) des Gehäuses (3), wobei das Gehäuse (3) einen rückwärts gerichteten, offenen Mund (25) zwischen einem querverlaufenden oberen Rand (29) und einem davon beabstandeten, querverlaufenden unteren Rand (28) festlegt, **dadurch gekennzeichnet, dass** sich ein Verschlusselement (30) zwischen einem proximalen Ende (31) und einem distalen Ende (32) erstreckt und mit dem Gehäuse (3) schwenkbar um eine querverlaufende Hauptschwenkachse (34) nahe dem oberen Rand (29) des rückwärts gerichteten, offenen Mundes (25) und dem proximalen Ende (31) des Verschlusselements (30) gekuppelt ist, und dass das Verschlusselement (30) um die Hauptschwenkachse (34) aus einem oberen, offenen Zustand, der eine rückwärtsgewandte Ausstoßöffnung (35) zwischen dem unteren Rand (28) des rückwärts gerichteten, offenen Mundes (25) und dem distalen Ende (32) des Verschlusselements (30) definiert, abwärts schwenkbar ist in einen unteren, geschlossenen Zustand, in dem das distale Ende (32) des Verschlusselements (30) nahe dem unteren Rand (28) des rückwärts gerichteten, offenen Mundes (25) den rückwärts gerichteten, offenen Mund (25) verschließt, wobei ein oberer hinterer Teil (38) des Gehäuses (3) und das Verschlusselement (30) in dem offenen Zustand einen Durchgang (39) über dem Transferelement (17) bilden, der in der Ausstoßöffnung (35) endet, und wobei ein Paar quer voneinander beabstandeter Deflektorelemente (40, 41) sich von einem aus dem Verschlusselement (30) und dem oberen hinteren Teil (38) des Gehäuses (3) in den Durchgang (39) über dem Transferelement (17) abwärts erstrecken und dazu eingerichtet sind, das geschnittene Futter in einer relativ schmalen Grasnarbe aus dem Gehäuse (3) nach hinten durch die Ausstoßöffnung (35) zu leiten.

2. Futtermäher nach Anspruch 1,
**dadurch gekennzeichnet, dass** die Deflektorelemente (40, 41) mit dem unteren Rand (29) des rückwärts gerichteten, offenen Mundes (25) und dem distalen Ende (32) des Verschlusselements (30) die Ausstoßöffnung (35) festlegen.

3. Futtermäher nach Anspruch 1 oder 2,
**dadurch gekennzeichnet, dass** die Deflektorelemente (40, 41) zugehörige Ablenkplatten (43, 44) umfassen, wobei die Ablenkplatten (43, 44) relativ zueinander in einer allgemein stromabwärts konvergierenden Richtung gewinkelt sind bezüglich der Abgaberichtung des geschnittenen Futters durch den Durchgang (39).

4. Futtermäher nach einem der vorhergehenden Ansprüche,
**dadurch gekennzeichnet, dass** eines der Deflektorelemente (40, 41) zwischen einem betriebsfähigen Zustand, in dem es sich abwärts in den Durchgang (39) über dem Transferelement (17) erstreckt, und einem nicht betriebsfähigen Zustand verlagerbar ist, in dem es im Wesentlichen keine ablenkende Wirkung auf das geschnittene Futter hat.

5. Futtermäher nach Anspruch 4,
**dadurch gekennzeichnet, dass** das verlagerbare eine (41) der Deflektorelemente (40, 41) mit dem einen des Verschlusselements (30) und dem oberen hinteren Teil (38) des Gehäuses (3) um eine Nebenschwenkachse (55) schwenkbar gekuppelt ist und um die Nebenschwenkachse (45) zwischen dem betriebsfähigen Zustand und dem nicht betriebsfähigen Zustand schwenkbar ist.

6. Futtermäher nach Anspruch 5,
**dadurch gekennzeichnet, dass** die Nebenschwenkachse (45) im Wesentlichen parallel zu dem verlagerbaren einen (41) der Deflektorelemente (40, 41) verläuft, wenn sich das verlagerbare eine (41) der Deflektorelemente (40, 41) in dem betriebsfähigen Zustand befindet.

7. Futtermäher nach einem der Ansprüche 4 bis 6,
**dadurch gekennzeichnet, dass** das verlagerbare eine (41) der Deflektorelemente (40, 41) in dem nicht betriebsfähigen Zustand im Wesentlichen neben dem einen des Verschlusselements (30) und dem oberen hinteren Teil (38) des Gehäuses (3) liegt, von dem aus sich das verlagerbare eine (41) der Deflektorelemente (40, 41) erstreckt.

8. Futtermäher nach einem der Ansprüche 4 bis 7,
**dadurch gekennzeichnet, dass** eine Verlagerungseinrichtung (55) vorhanden ist, um das verlagerbare eine (41) der Deflektorelemente (40, 41) zwischen dem betriebsfähigen Zustand und dem nicht betriebsfähigen Zustand zu verlagern.

9. Futtermäher nach einem der vorhergehenden Ansprüche,
**dadurch gekennzeichnet, dass** die Deflektorelemente (40, 41) sich auf dem oberen hinteren Teil (38) des Gehäuses (3) befinden.

10. Futtermäher nach einem der vorhergehenden Ansprüche,
**dadurch gekennzeichnet, dass** die Ausstoßöffnung (35) sich hinter dem Transferelement (17) befindet.

11. Futtermäher nach einem der vorhergehenden Ansprüche,
**dadurch gekennzeichnet, dass** das distale Ende (32) des Verschlusselements (30) in einem querverlaufenden distalen Rand (32) endet, der dazu eingerichtet ist, an dem unteren Querrand (28) des offenen Mundes (25) anzuliegen, wenn sich das Verschlusselement (30) in dem geschlossenen Zustand befindet.

12. Futtermäher nach einem der vorhergehenden Ansprüche,
**dadurch gekennzeichnet, dass** das proximale Ende (31) des Verschlusselements (30) in einem querverlaufenden proximalen Rand (31) endet, der nahe dem querverlaufenden oberen Rand (29) verläuft, welcher durch den rückwärts gerichteten, offenen Mund (25) definiert ist.

13. Futtermäher nach einem der vorhergehenden Ansprüche,
**dadurch gekennzeichnet, dass** das Verschlusselement (30) von einer Seite des Gehäuses (3) betrachtet einen bogenförmigen Querschnitt hat.

14. Verfahren zum Konfigurieren eines Futtermähers (1) zum Ausstoßen einer relativ schmalen Grasnarbe geschnittenen Futters aus dem Futtermäher (1) in einer rückwärts gerichteten Richtung, wobei der Futtermäher (1) aufweist ein Gehäuse (3), das einen hohlen Innenbereich (7) und einen vorwärts gerichteten, offenen Mund (8) festlegt, mehrere Schneidelemente (10), die in oder nahe dem vorwärts gerichteten, offenen Mund (8) angeordnet sind, ein in dem hohlen Innenbereich (7) hinter den Schneidelementen (10) angeordnetes Transferelement (17) zum Drängen des geschnittenen Futters von den Schneidelementen (10) quer durch den hohlen Innenbereich (7) zum Ausstoß nahe einer Seite (18) des Gehäuses (3), wobei das Gehäuse (3) einen rückwärts gerichteten, offenen Mund (25) mit einem querverlaufenden oberen Rand (29) und einem davon beabstandeten, querverlaufenden unteren Rand (28) festlegt, wobei das Verfahren umfasst ein Vorsehen eines Verschlusselements (30), das sich zwischen einem proximalen Ende (31) und einem distalen Ende (32) erstreckt, und ein schwenkbares Kuppeln des Verschlusselements (30) mit dem Gehäuse (3) um eine querverlaufende Hauptschwenkachse (34) nahe dem oberen Rand (29) des offenen Mundes (25) und dem proximalen Ende (31) des Verschlusselements (30), so dass das Verschlusselement (30) um die Hauptschwenkachse (34) aus einem oberen offenen Zustand, der eine rückwärtsgewandte Ausstoßöffnung (35) zwischen dem unteren Rand (28) des rückwärts gerichteten, offenen Mundes (25) und dem distalen Ende (32) des Verschlusselements (30) definiert, abwärts schwenkbar ist in einen unteren, geschlossenen Zustand, in dem das distale Ende (32) des Verschlusselements (30) nahe dem unteren Rand (28) des rückwärts gerichteten, offenen Mundes (25) des rückwärts gerichteten, offenen Mund (25) verschließt, ein Anordnen des Verschlusselements (30) dergestalt, dass ein oberer hinterer Teil (38) des Gehäuses (3) und das Verschlusselement (30) in dem offenen Zustand einen Durchgang (39) über dem Transferelement (17) bilden, der in der Ausstoßöffnung (35) endet, und ein Anordnen eines Paars beabstandeter Deflektorelemente (40, 41), die sich von einem aus dem Verschlusselement (30) und dem oberen hinteren Teil (38) des Gehäuses (3) abwärts erstrecken, wobei die Deflektorelemente (40, 41) dazu eingerichtet sind, sich in den Durchgang (39) über dem Transferelement (17) zu erstrecken, und dazu eingerichtet sind, das geschnittene Futter in einer relativ schmalen Grasnarbe aus dem Gehäuse (3) nach hinten durch die Ausstoßöffnung (35) zu leiten.

15. Verfahren zum Konfigurieren eines Futtermähers zum Ausstoßen einer relativ schmalen Grasnarbe geschnittenen Futters aus dem Futtermäher in einer rückwärts gerichteten Richtung, wobei der Futtermäher aufweist ein Gehäuse (3), das einen hohlen Innenbereich (7) und einen vorwärts gerichteten, offenen Mund (8) festlegt, mehrere Schneidelemente (10), die in oder nahe dem vorwärts gerichteten, offenen Mund (8) angeordnet sind, ein in dem hohlen Innenbereich (7) hinter den Schneidelementen (10) angeordnetes Transferelement (17) zum Drängen des geschnittenen Futters von den Schneidelementen (10) quer durch den hohlen Innenbereich (7) zum Ausstoß nahe einer Seite (18) des Gehäuses (3), wobei das Gehäuse (3) einen rückwärts gerichteten, offenen Mund zwischen einem querverlaufenden oberen Rand und einem davon beabstandeten, querverlaufenden unteren Rand definiert, wobei das Verfahren umfasst ein Bereitstellen einer nachrüstbaren Vorrichtung, wobei die nachrüstbare Vorrichtung eingerichtet ist zur Befestigung an dem Gehäuse (3) und ein Adapterelement (30, 38, 40, 41) aufweist zum Verschließen des rückwärts gerichteten, offenen Mundes, wobei das Adapterelement ein stationäres Element (38), das sich zwischen einem proximalen Ende und einem distalen Ende erstreckt, und ein Verschlusselement (30) aufweist, das zwischen einem proximalen Ende (31) und einem distalen Ende (32) verläuft und mit dem stationären Element (38) um eine querverlaufende Hauptschwenkachse (34) schwenkbar gekuppelt ist, die sich in Querrichtung neben dem distalen Ende des stationären Elements (38) und dem proximalen Ende (31) des Verschlusselements (30) erstreckt, wobei das stationäre Element (38) eingerichtet ist zum Kuppeln mit dem Gehäuse (3), wobei sich das proximale Ende des stationären Elements (38) nahe dem oberen Rand des rückwärts gerichteten, offenen Mundes befindet und ein distales Ende (32) des Verschlusselements (30) sich nahe dem unteren Rand des rückwärts gerichteten, offenen Mundes befindet, so dass die Hauptschwenkachse (34) bezüglich des Gehäuses (3) quer verläuft und das Verschlusselement (30) um die Hauptschwenkachse (34) aus einem offenen Zustand, der eine rückwärtsgewandte Ausstoßöffnung (35) zwischen dem unteren Rand des rückwärts gerichteten, offenen Mundes und dem distalen Ende (32) des Verschlusselements (30) definiert, abwärts schwenkbar ist in einen geschlossenen Zustand, in dem das distale Ende (32) des Verschlusselements (30) nahe dem unteren Rand des rückwärts gerichteten, offenen Mundes den rückwärts gerichteten, offenen Mund verschließt, wobei das stationäre Element (38) und das Verschlusselement (30) in dem offenen Zustand dazu konfiguriert sind, einen Durchgang (39) über dem Transferelement (17) zu bilden, der in der Ausstoßöffnung (35) endet, und wobei ein Paar quer voneinander beabstandeter Deflektorelemente (40, 41) sich von einem aus dem Verschlusselement (30) und dem stationären Element (38) abwärts erstrecken und dazu eingerichtet sind, sich in den Durchgang (39) über dem Transferelement (17) zu erstrecken, und dazu eingerichtet sind, das geschnittene Futter in einer relativ schmalen Grasnarbe aus dem Gehäuse (3) nach hinten durch die Ausstoßöffnung (35) zu leiten.

## Revendications

1. Tondeuse à fourrage comprenant un boîtier (3) définissant une région intérieure creuse (7) et une bouche ouverte vers l'avant (8), une pluralité d'éléments de coupe (10) positionnés dans ou de manière adjacente à la bouche ouverte vers l'avant (8), un élément de transfert (17) positionné dans la région intérieure creuse (7) vers l'arrière des éléments de coupe (10) pour pousser le fourrage coupé des éléments de coupe (10) transversalement d'un côté à l'autre de la région intérieure creuse (7) pour la décharge d'un côté (18) adjacent du boîtier (3), le boîtier (3) définissant une bouche ouverte vers l'arrière (25) entre un bord supérieur (29) s'étendant de manière transversale et un bord inférieur (28) espacé s'étendant de manière transversale, **caractérisée en ce qu'**un élément de fermeture (30) s'étend entre une extrémité proximale (31) et une extrémité distale (32), et est couplé de manière pivotante au boîtier (3) autour d'un axe de pivot principal (34) s'étendant de manière transversale, adjacent au bord supérieur (29) de la bouche ouverte vers l'arrière (25) et l'extrémité proximale (31) de l'élément de fermeture (30), et l'élément de fermeture (30) peut pivoter vers le bas autour de l'axe de pivot principal (34) à partir d'un état ouvert supérieur définissant une sortie de décharge orientée vers l'arrière (35) entre le bord inférieur (28) de la bouche ouverte vers l'arrière (25) et l'extrémité distale (32) de l'élément de fermeture (30), jusqu'à un état fermé inférieur avec l'extrémité distale (32) de l'élément de fermeture (30) adjacente au bord inférieur (28) de la bouche ouverte vers l'arrière (25) fermant la bouche ouverte vers l'arrière (25), une partie arrière supérieure (38) du boîtier (3) et l'élément de fermeture (30) à l'état ouvert forment une voie de passage (39) sur l'élément de transfert (17) qui se termine par la sortie de décharge (35), et une paire d'éléments de déflecteur (40, 41) transversalement espacés s'étend à partir de l'un parmi l'élément de fermeture (30) et la partie arrière supérieure (38) du boîtier (3) dans la voie de passage (39) sur l'élément de transfert (17) et sont configurés pour diriger le fourrage coupé vers l'arrière à partir du boîtier (3) à travers la sortie de décharge (35) en une couche végétale relativement étroite.

2. Tondeuse à fourrage selon la revendication 1, **caractérisée en ce que** les éléments de déflecteur (40, 41) définissent avec le bord inférieur (28) de la bouche ouverte vers l'arrière (25) et l'extrémité distale (32) de l'élément de fermeture (30), la sortie de décharge (35).

3. Tondeuse à fourrage selon la revendication 1 ou 2, **caractérisée en ce que** les éléments de déflecteur (40, 41) comprennent des plaques de déflecteur (43, 44) respectives, les plaques de déflecteur (43, 44) étant coudées les unes par rapport aux autres dans une direction convergeant généralement vers le bas par rapport à la direction de distribution du fourrage coupé à travers la voie de passage (39).

4. Tondeuse à fourrage selon l'une quelconque des revendications précédentes, **caractérisée en ce que** l'un des éléments de déflecteur (40, 41) peut être poussé entre un état opérationnel s'étendant vers le bas dans la voie de passage (39) sur l'élément de transfert (17), et un état non opérationnel ayant sensiblement aucun effet déflecteur sur le fourrage coupé.

5. Tondeuse à fourrage selon la revendication 4, **caractérisée en ce que** l'élément (41) pouvant être poussé des éléments de déflecteur (40, 41) est couplé de manière pivotante à l'un parmi l'élément de fermeture (30) et la partie arrière supérieure (38) du boîtier (3) autour d'un axe de pivot secondaire (45), et peut pivoter autour de l'axe de pivot secondaire (45) entre l'état opérationnel et l'état non opérationnel.

6. Tondeuse à fourrage selon la revendication 5, **caractérisée en ce que** l'axe de pivot secondaire (45) s'étend de manière sensiblement parallèle à l'élément pouvant être poussé (41) des éléments de déflecteur (40, 41) lorsque l'élément pouvant être poussé (41) des éléments de déflecteur (40, 41) est à l'état opérationnel.

7. Tondeuse à fourrage selon l'une quelconque des revendications 4 à 6, **caractérisée en ce que** l'élément pouvant être poussé (41) des éléments de déflecteur (40, 41) à l'état non opérationnel, est sensiblement adjacent à l'un parmi l'élément de fermeture (30) et la partie arrière supérieure (38) du boîtier (3) à partir duquel l'élément pouvant être poussé (41) des éléments de déflecteur (40, 41), s'étend.

8. Tondeuse à fourrage selon l'une quelconque des revendications 4 à 7, **caractérisée en ce qu'**un moyen de poussée (53) est prévu pour pousser l'élément pouvant être poussé (41) des éléments de déflecteur (40, 41) entre l'état opérationnel et l'état non opérationnel.

9. Tondeuse à fourrage selon l'une quelconque des revendications précédentes, **caractérisée en ce que** les éléments de déflecteur (40, 41) sont positionnés sur la partie arrière supérieure (38) du boîtier (3).

10. Tondeuse à fourrage selon l'une quelconque des revendications précédentes, **caractérisée en ce que** la sortie de décharge (35) est positionnée à l'arrière de l'élément de transfert (17).

11. Tondeuse à fourrage selon l'une quelconque des revendications précédentes, **caractérisée en ce que** l'extrémité distale (32) de l'élément de fermeture (30) se termine par un bord distal (32) s'étendant de manière transversale configuré pour venir en butée contre le bord transversal inférieur (28) de la bouche ouverte (25) lorsque l'élément de fermeture (30) est à l'état fermé.

12. Tondeuse à fourrage selon l'une quelconque des revendications précédentes, **caractérisée en ce que** l'extrémité proximale (31) de l'élément de fermeture (30) se termine par un bord proximal (31) s'étendant transversalement, qui s'étend de manière adjacente au bord supérieur (29) s'étendant transversalement défini par la bouche ouverte vers l'arrière (25) .

13. Tondeuse à fourrage selon l'une quelconque des revendications précédentes, **caractérisée en ce que** l'élément de fermeture (30) a une section transversale arquée lorsqu'elle est observée depuis un côté du boîtier (30).

14. Procédé pour configurer une tondeuse à fourrage (1) pour décharger une couche végétale relativement étroite de fourrage coupé dans une direction vers l'arrière à partir de la tondeuse à fourrage (1), la tondeuse à fourrage (1) comprenant un boîtier (3) définissant une région intérieure creuse (7) et une bouche ouverte vers l'avant (8), une pluralité d'éléments de coupe (10) positionnés dans ou de manière adjacente à la bouche ouverte vers l'avant (8), un élément de transfert (17) positionné dans la région intérieure creuse (7) vers l'arrière des éléments de coupe (10) pour pousser le fourrage coupé à partir des éléments de coupe (10) transversalement d'un côté à l'autre de la région intérieure creuse (7) pour décharger un côté adjacent (18) du boîtier (3), le boîtier (3) définissant une bouche ouverte vers l'arrière (25) ayant un bord supérieur (29) s'étendant de manière transversale et un bord inférieur espacé (28) s'étendant de manière transversale, le procédé comprenant les étapes suivantes : prévoir un élément de fermeture (30) s'étendant entre une extrémité proximale (31) et une extrémité distale (32) et coupler de manière pivotante l'élément de fermeture (30) au boîtier (3) autour d'un axe de pivot principal (34) s'étendant transversalement adjacent au bord supérieur (29) de la bouche ouverte (25) et l'extrémité proximale (31) de l'élément de fermeture (30), de sorte que l'élément de fermeture (30) peut pivoter vers le bas autour de l'axe de pivot principal (34) à partir d'un état ouvert supérieur définissant une sortie de décharge (35) orientée vers l'arrière entre le bord inférieur (28) de la bouche ouverte vers l'arrière (25) et l'extrémité distale (32) de l'élément de fermeture (30), jusqu'à un état fermé inférieur avec l'extrémité distale (32) de l'élément de fermeture (30) adjacente au bord inférieur (28) de la bouche ouverte vers l'arrière (25) fermant la bouche ouverte vers l'arrière (25), positionner l'élément de fermeture (30) de sorte qu'une partie arrière supérieure (38) du boîtier (3) et l'élément de fermeture (30) à l'état ouvert forment une voie de passage (39) sur l'élément de transfert (17) qui se termine par la sortie de décharge (35) et positionner une paire d'éléments de déflecteur (40, 41) espacés s'étendant vers le bas à partir de l'un parmi l'élément de fermeture (30) et la partie arrière supérieure (38) du boîtier (3), les éléments de déflecteur (40, 41) étant configurés pour s'étendre dans la voie de passage (39) sur l'élément de transfert (17) et étant configurés pour diriger le fourrage coupé vers l'arrière à partir du boîtier (3) en passant par la sortie de décharge (35) en une couche végétale relativement étroite.

15. Procédé pour configurer une tondeuse à fourrage pour décharger une couche végétale relativement étroite de fourrage coupé dans une direction vers l'arrière à partir de la tondeuse à fourrage, la tondeuse à fourrage comprenant un boîtier (3) définissant une région intérieure creuse (7) et une bouche ouverte vers l'avant (8), une pluralité d'éléments de coupe (10) positionnés dans ou de manière adjacente à la bouche ouverte vers l'avant (8), un élément de transfert (17) positionné dans la région intérieure creuse (7) vers l'arrière des éléments de coupe (10) pour pousser le fourrage coupé à partir des éléments de coupe (10) transversalement d'un côté à l'autre de la région intérieure creuse (7) pour la décharge d'un côté (18) adjacent du boîtier (3), le boîtier (3) définissant une bouche ouverte vers l'arrière entre un bord supérieur s'étendant de manière transversale et un bord inférieur espacé s'étendant de manière transversale, le procédé comprenant les étapes suivantes : prévoir un appareil pouvant être modernisé, l'appareil pouvant être modernisé étant configuré pour monter le boîtier (3) et comprenant un élément d'adaptateur (30, 38, 40, 41) pour fermer la bouche ouverte vers l'arrière, l'élément d'adaptateur comprenant un élément fixe (38) s'étendant entre une extrémité proximale et une extrémité distale, et un élément de fermeture (30) s'étendant entre une extrémité parallèle (31) et une extrémité distale (32) et étant couplé de manière pivotante à l'élément fixe (38) autour d'un axe de pivot principal (34) s'étendant transversalement, s'étendant transversalement de manière adjacente à l'extrémité distale de l'élément fixe (38) et à l'extrémité proximale (31) de l'élément de fermeture (30), l'élément fixe (38) étant configuré pour se coupler au boîtier (3) avec l'extrémité proximale de l'élément fixe (38) adjacente au bord supérieur de la bouche ouverte vers l'arrière, et une extrémité distale (32) de l'élément de fermeture (30) adjacent au bord inférieur de la bouche ouverte vers l'arrière, de sorte que l'axe de pivot principal (34) s'étend transversalement par rapport au boîtier (3) et l'élément de fermeture (30) peut pivoter autour de l'axe de pivot principal (34) vers le bas à partir d'un état ouvert définissant une sortie de décharge orientée vers l'arrière (35) entre le bord inférieur de la bouche ouverte vers l'arrière et l'extrémité distale (32) de l'élément de fermeture (30), jusqu'à un état fermé avec l'extrémité distale (32) de l'élément de fermeture (30) adjacente au bord inférieur de la bouche ouverte vers l'arrière fermant la bouche ouverte vers l'arrière, l'élément fixe (38) et l'élément de fermeture (30) à l'état ouvert étant configurés pour former une voie de passage (39) sur l'élément de transfert (17) qui se termine par la sortie de décharge (35) et une paire d'éléments de déflecteur transversalement espacés (40, 41) s'étendant vers le bas à partir de l'un parmi l'élément de fermeture (30) et l'élément fixe (38) et configurés pour s'étendre dans la voie de passage (39) sur l'élément de transfert (17) et étant configurés pour diriger le fourrage coupé vers l'arrière à partir du boîtier (3) par la sortie de décharge (35), en une couche végétale relativement étroite.
